# EUROPEAN PATENT APPLICATION

(11) **EP 4 243 335 A1**
(43) Date of publication of application: **13.09.2023**
(21) Application number: 22161646.9
(22) Date of filing: 11.03.2022
(51) Int. Cl.: H04L 9/08, H04L 9/32, G09C 1/00

(54) **DEVICE IMPLEMENTING A CONFIGURABLE FINITE STATE MACHINE**

(71) Applicant: Paris Sciences et Lettres, 75006 Paris (FR); Ecole Supérieure de Physique et de Chimie Industrielles de la Ville de Paris, 75005 Paris (FR); Centre national de la recherche scientifique, 75016 Paris (FR); Stichting Nederlandse Wetenschappelijk Onderzoek Instituten, institute AMOLF, 1098 XG Amsterdam (NL); Universiteit Leiden, 2311 EZ Leiden (NL)
(72) Inventor: SINGH, Amitesh, 2332 CA Leiden (NL); LABOUSSE, Mathieu, 93000 Aubervillers (FR); VAN HECKE, Martin, 2333 VE Leiden (NL)
(74) Representative: de Jong, Jean Jacques

(57) **Abstract**

The invention relates to a device implementing a finite state machine, comprising a plurality of cells (Ci), each having three states (RS, LF, RF) comprising a released state (RS) and two activated states (LF, RF) respectively corresponding to opposite biases; a control input (Ai, BVi1, BVi2) for setting a current state of the cell from the released state to one of the activated states corresponding to a current bias of the cell, or from one of the activated states to the released state; and a bias link (BHi) coupling the cell to an adjacent cell (Ci+1), and setting the current bias of the cell to the current bias of the adjacent cell when the latter is an activated state, a part of the cells comprising two bias links (BHi, BHi+1) coupled to two adjacent cells, the current bias of the cell being a default bias of the cell when each adjacent cell of the cell is in the released state.

## Description

### TECHNICAL FIELD

The present invention relates to a device implementing a finite state machine. This device can be used for example as an encoder and an anti-counterfeiting device.

### BACKGROUND

Generally, the devices for fighting against counterfeiting of goods, such as clothes, sportwear, luxury goods involve increasingly complex methods, complexity being a guarantee of efficiency. These methods are mainly based on chemistry, optics or a combination of both. These methods require a complex protocol readout to check the authenticity of a good. In contrast, users would require anti-counterfeiting devices that are reliable and easy to manipulate to check and certify the authenticity of a good.

Recently, metamaterials have been developed to obtain physical properties that cannot be achieved with natural materials. Physical properties of metamaterials arise from their geometry rather than their chemical composition.

It may be desirable to create electrical or mechanical devices implementing configurable cryptographic functions and/or finite state machines.

### SUMMARY

A device implementing a finite state machine is described. The device may include a plurality of cells, each cell comprising: three states comprising a released state, and two activated states respectively corresponding to opposite biases, a control input for setting a current state of the cell from the released state to one of the activated states corresponding to a current bias of the cell, or from one of the final states to the released state, the cell being maintained in one of the activated states by the control input, and a bias link coupling the cell to an adjacent cell of the plurality of cells, and setting the current bias of the cell to the current bias of the adjacent cell when the adjacent cell is in one of the activated states, a part of the plurality of cells comprising two bias links coupled respectively to two adjacent cells, the current bias of the cell being a default bias of the cell when each adjacent cell of the cell is in the released state.

According to an embodiment, a state of the device is defined by one or more of the states or current biases of the cells of the device.

According to an embodiment, one of the plurality of cells is configured to switch from one to the other of the activated states corresponding to the default bias of the cell when the adjacent cell is set from one of the activated states to the released state.

According to an embodiment, a pair of cells having a same default bias and a same adjacent cell is configured to stay in a same activated state corresponding to a current bias distinct from the default bias of the pair of cells when the adjacent cell is set from the activated state corresponding to the current bias to the released state.

According to an embodiment, each cell of the plurality of cells comprises a node coupled to: a control link having a free end movable between a first position in which the cell is set in the released state, and a second position in which the cell is maintained in one of the activated states, each state of the cell corresponding to a respective position of the node, and the bias link coupled to a node of an adjacent cell of the plurality of cells, the control link and the bias link being elastically deformable, a part of the nodes of the cells being coupled to the nodes of two adjacent cells by a respective bias link.

According to an embodiment, each cell of the plurality of cells comprises two control links each having a free end movable between the first position in which the cell is set in the released state and the second position in which the cell is in one of the activated states.

According to an embodiment, a ratio of a stiffness of the control links to a stiffness of the bias links is set between 0.1 and 1.

According to an embodiment, wherein all the cells are made of a single piece in an elastically deformable material manufactured by molding or additive manufacturing.

According to an embodiment, the cells comprise parts of different stiffnesses, the respective stiffnesses of the parts of the cells and respective default biases of the cells being separately adjusted to render a behavior of the device less predictable.

According to an embodiment, the respective stiffnesses of the parts of the cells and respective default biases of the cells are randomly adjusted.

According to an embodiment, the cells are linked by the bias links to form a chain.

According to an embodiment, the cells are linked by the bias links to form a two-dimensional structure in which at least a part of the cells has four or six adjacent cells.

According to an embodiment, the device is configured to implement a logic function or a cryptographic function having a robustness based on a complexity of a behavior of the device.

According to an embodiment, the device comprises a casing enclosing the cells and masking the respective default biases of the cells and leaving exposed the activated state of at least one of the cells.

According to an embodiment, the device comprises means for destroying the cells when the casing is opened, such that the default biases of the cells are kept masked.

### BRIEF DESCRIPTION OF THE DRAWINGS

The method and/or device may be better understood with reference to the following drawings and description. Non-limiting and non-exhaustive descriptions are described with the following drawings.
Figures 1A, 1B are block diagrams of a device, according to an embodiment;
Figure 2 show states of one cell of the device, according to an embodiment;
Figures 3, 3A are state - transition diagrams showing a first operating mode of the device, according to an embodiment;
Figures 4, 4A are state - transition diagrams showing a second operating mode of the device, according to another embodiment;
Figures 5, 5A are state - transition diagrams showing a third operating mode of the device, according to another embodiment;
Figures 6A, 6B are schematic diagrams showing two states of a cell of the device, according to another embodiment;
Figures 7A, 7B are schematic diagrams showing two states of the device, according to another embodiment;
Figures 8A to 8E show are front views of the device in different states, according to another embodiment;
Figure 9 shows a front view of the device according to another embodiment;
Figures 10 and 11 are state - transition diagrams showing different operating modes of the device, according to other embodiments;
Figures 12 to 16 are state - transition diagrams showing different operating modes of the device, according to other embodiments;
Figures 17 and 18 show two-dimensional device according to other embodiments;
Figures 19, 19A, 19B show one cell of the device and truth tables specifying the behavior of the cell, according to another embodiment;

### DETAILED DESCRIPTION

In the above-listed figures, like referenced signs may refer to like or similar parts throughout the different figures unless otherwise specified. Thus, like reference signs may refer to similar parts having different structure and/or behavior throughout the figures.

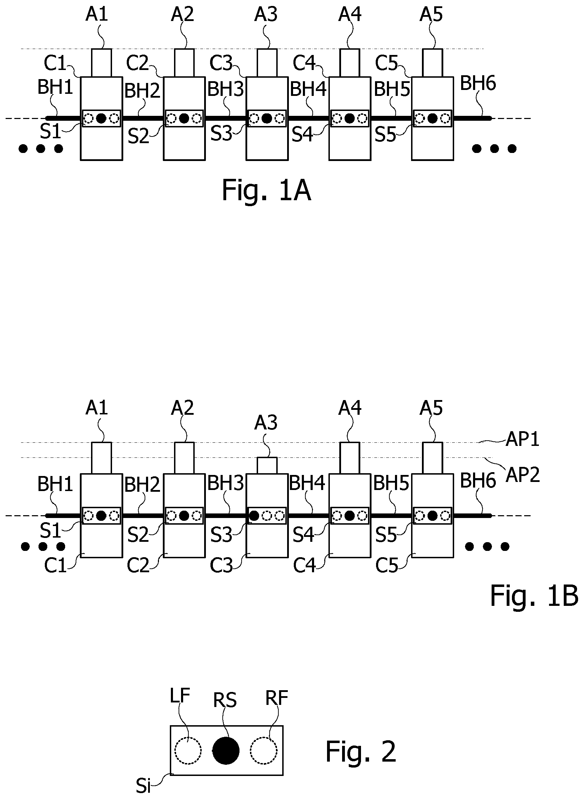

Figures 1A, 1B show a device according to an embodiment. The device comprises a plurality of cells C1, C2, C3, C4, C5 coupled together to form a chain by bias links BH1, BH2, BH3, BH4, BH5, BH6. Each cell C1-C5 is controlled by a respective actuator A1, A2, A3, A4, A5 having two fixed stable positions, e.g. associated with a bistable mechanism. As shown in Figure 2, each cell C1-C5 has a respective internal state Si (i=1, 2, ..., 5) which can switch or toggle between three states RS, LF, RF, depending on the position of the corresponding actuator A1-A5 and a current mechanical bias of the cell. The three states of each cell include a released state RS and two activated states LF, RF. Each cell Ci has an intrinsic or default bias when the device is in an initial state.

Each of the actuators A1-A5 can take one or the other of an inactive position AP1 and an active position AP2, which are spaced apart from each other. When the actuator Ai of one cell Ci (i = 1, ..., 5) is in the inactive position AP1, the cell Ci is the released state RS. The current mechanical bias of each cell Ci (i = 1, ..., 5) has a direction set to one of two opposite directions noted "L" and "R", and determines a transition to one or the other of the two activated states LF, RF, occurring when the actuator Ai of a cell Ci is moved from the inactive position AP1 to the active position AP2. During this transition, the cell Ci is actuated from the released state RS to one of the activated states LF, RF, according to the current mechanical bias "L" or "R", of the cell Ci. In the active position AP2, the actuator Ai maintains the cell in its final position LF or RF. The state of the device can be defined by one or more of the states S1-S5 of the cells C1-C5.

In the following, the terms "left" and right" are only used to designate two opposite directions.

Each cell C1-C5 is coupled to two adjacent cells by two of the bias links BH1-BH5. The bias links BH1-BH5 can be configured to set the current mechanical bias of the adjacent cells of each cell when the latter is in one of its activated states LF, RF, the current mechanical bias of the adjacent cells being set to a direction defined by the activated state of the cell. When the two adjacent cells of one cell are in the released state RS, the cell is in the released state with a current mechanical bias set to its intrinsic mechanical bias.

In the example of Figure 1A, all the actuators A1-A5 are in the inactive position AP1. Thus, all the cells C1-C5 are in the released state RS and have a respective current mechanical bias defined by their respective intrinsic bias. In the example of Figure 1B, the actuator A3 is moved from the inactive position AP1 to the active position AP2. Thus, the cell C3 switches from the released state to one of the activated states LF, RF according to the current mechanical bias of cell C3. In the example of Figure 1B, the activated state LF of the cell C3 is located to the left of the released state RS, meaning that the intrinsic bias of the cell C3 is directed to the left. When the actuator A3 is moved back to the inactive position AP1, the cell C3 returns to its the released state RS, and the device returns to its initial state as shown in Figure 1A.

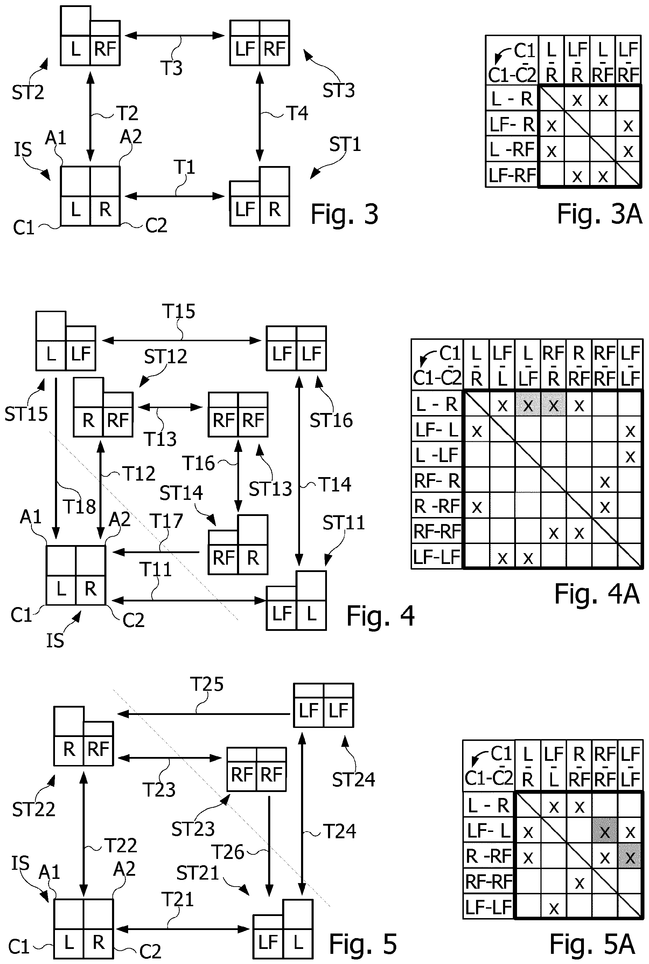

Figures 3, 4 and 5 are state and transition diagrams illustrating different operating modes of the device, according to different embodiments. Figures 3A, 4A and 5A illustrate another representation in the form of a table, of the state and transition diagrams of Figures 3, 4, 5, respectively. Each of figures 3-5 shows different states of two adjacent cells C1, C2 of the device and the positions of their respective actuators A1, A2, when the cells C1 and C2 have respective intrinsic biases in opposite directions "L" and "R", respectively. In the following, both L and R represent the released state RS of a cell Ci and indicate the current mechanical bias "L" and "R" of the cell. These figures further show transitions Ti between the different states of the adjacent cells C1, C2. In figures 3A, 4A, 5A, the different possible states of the device are shown in the first row and the first column. The possible transitions are shown by a cross "x" at an intersection of a row and a column of the table. A diagonal line from the first row and first column to the last row and last column of the table separates the transitions triggered by moving one of the actuators A1, A2 from the inactive position AP1 to the active position AP2 (below the diagonal line), from the transitions triggered by moving one of the actuators A1, A2 from the active position AP2 to the inactive position AP1 (above the diagonal line). All reversible transitions appear on both sides of the table separated by the diagonal line. Transitions in a box colored in grey are irreversible transitions.

In Figures 3, 3A, the bias link BH2 between the cells C1, C2 is weak or absent, such that they do not change the current mechanical bias of the adjacent cell when one of the two cells switches from its released state RS to a activated state "LF-RF") having a direction opposite to that of the intrinsic mechanical bias of the adjacent cell. Figures 3, 3A show the states IS ("L-R"), ST1 ("LF-R"), ST2 ("L-RF"), ST3 ("LF-RF") of the device and transitions T1, T2, T3, T4 between the states IS, ST1, ST2, ST3. The transition T1 links an initial state IS of the device and the state ST1. The transition T2 links the initial state IS and the state ST2. The transitions T3 and T4 link the states ST2 and ST1 respectively, and the state ST3.

In the initial state IS of the device, the cells C1, C2 are in their released states RS (="R" or "L"). The intrinsic mechanical bias "L" of the cell C1 is in the left direction and the intrinsic mechanical bias "R" of the cell C2 is in the right direction. The transition T1 is triggered from the initial state IS of the device when the actuator A1 is moved from the inactive position AP1 to the active position AP2 to reach state ST1. This operation switches the state of the cell C1 to the activated state LF according to the mechanical bias "L" of the cell C1. Since the bias link between the cells C1 and C2 is weak or absent, the mechanical bias of the cell C2 remains in the right direction.

The transition T2 is triggered from the initial state IS of the device when the actuator A2 is moved from the inactive position AP1 to the active position AP2 to reach the state ST2. This operation switches the state of the cell C2 to the activated state RF according to the mechanical bias "R" of the cell C2. Since the bias link between cells C1 and C2 is weak or absent, the mechanical bias of the cell C1 remains in the left direction "L".

The transition T3 is triggered from the state ST2 when the actuator A1 is further moved from the position AP1 to the position AP2 to reach the state ST3 where both the cells C1, C2 are in their respective activated state LF, RF according to their respective intrinsic mechanical biases.

The transition T4 is triggered from the state ST1 when the actuator A2 is further moved from position AP1 to position AP2 to reach the state ST3. It can be observed that all transitions T1-T4 are reversible as shown by double-sided arrows in Figure 3 (the positions of the "x" in the table of Figure 3A are symmetrical about the diagonal line).

Figures 4, 4A illustrate an operating mode of the device, according to a second embodiment, in which the bias link between the cells C1, C2 is present. Figures 4, 4A shows different states IS ("L-R"), ST11 ("LF-L"), ST12 ("R-RF"), ST13 ("RF-RF"), ST14 ("RF-R"), ST15 ("L-LF"), ST16 ("LF-LF") of the two cells C1, C2, and transitions T11, T12, T13, T14, T15, T16, T17, T18 between the different states of the cells C1, C2. The transition T11 links the initial state IS of the cells C1, C2 and the first state ST11. The transition T12 links the initial state IS of the cells C1, C2 and the state ST12. The transition T13 links the states ST12 and ST13. The transition T14 links the states ST11 and ST16. The transition T15 links the states ST15 and ST16. The transition T16 links the states ST14 and ST13. The transition T17 links the state ST14 to the initial state IS, and the transition T18 links the state ST15 to the initial state IS.

In the initial state IS of the device, the cells C1, C2 are in the released state. The intrinsic mechanical bias "L" of cell C1 is in the left direction and the intrinsic mechanical bias "R" of the cell C2 is in the right direction. The transition T11 is triggered from the initial state IS when the actuator A1 is moved from the inactive position AP1 to the active position AP2 to reach the state ST11. This operation switches the cell C1 to the activated state LF according to the mechanical bias "L" of cell C1. Due to the bias link between the cells C1 and C2, the current mechanical bias of the cell C2 is set to the left direction "L".

The transition T12 is triggered from the initial state IS when the actuator A2 is moved from position AP1 to position AP2 to reach the state ST12. This operation switches the cell C2 to the activated state RF according to the current mechanical bias "R" of the cell C2. Due to the bias link between the cells C1 and C2, the mechanical bias of the cell C1 is set to the right direction "R".

The transition T13 is triggered from the state ST12 when the actuator A1 is further moved from the position AP1 to the position AP2 to reach the state ST13 where both the cells C1, C2 are in the activated state RF, according to their respective current mechanical biases "R".

The transition T14 is triggered from the state ST11 when actuator A2 is further moved from the position AP1 to the position AP2 to reach the state ST16 where both the cells C1, C2 are in the activated state LF, according to their respective current mechanical biases "L" in the state ST11.

The transition T15 is triggered from the state ST16 when the actuator A1 is moved from the position AP2 to the position AP1 to reach the state ST15 where the cell C1 is in the released state RS. Since the cell C2 is in the activated state LF, and due to the bias link between the cells C1, C2, the current mechanical bias of the cell C1 is set to the left "L" in state ST15.

The transition T16 is triggered from the state ST13 when the actuator A2 is moved from the position AP2 to the position AP1 to reach the state ST14 where the cell C2 is in the released state RS. Since the cell C1 is in the activated state RF, and due to the bias link between the cells C1, C2, the current mechanical bias of cell C1 is set to the right "R" in the state ST14.

It can be observed that all the transitions T11-T16 are reversible as shown by double-sided arrows, by moving the corresponding actuator A1 or A2 in a reverse direction from AP1 to AP2 or AP2 to AP1.

The transition T17 is triggered from the state ST14 when the actuator A1 is moved from the position AP2 to the position AP1 to reach the initial state IS where the cell C1 switches to the released state RS with its intrinsic mechanical bias "L". The transition T18 is triggered from the state ST15 when the actuator A2 is moved from the position AP2 to the position AP1 to reach the initial state IS where the cell C2 switches to the released state RS with its intrinsic mechanical bias "R". The transitions T17, T18 are not reversible as shown by single-sided arrows (or grey boxes in Figure 4A), since the respective activated states RF, LF of cells C1, C2 in states ST14 and ST15 do not correspond to the respective directions "L" and "R" of the intrinsic mechanical biases of cells C1, C2.

Figures 5, 5A illustrates an operating mode of the device, according to a third embodiment where the bias link between the cells C1, C2 is strong enough with the intrinsic bias of the cells to enable a cell to switch between the two activated states RF and LF. Figures 5, 5A shows different states IS ("L-R"), ST21 ("LF-L"), ST22 ("R-RF"), ST23 ("RF-RF"), ST24 ("LF-LF") of the device, and transitions T21, T22, T23, T24, T25, T26 between the different states of the device. The transition T21 links the initial state IS to the state ST21. The transition T22 links the initial state IS to the state ST22. The transition T23 links the state ST22 to the state ST23. The transition T24 links the state ST21 to the state ST24. The transition T25 links the state ST24 to the state ST22, and the transition T26 links the state ST23 to the state ST21.

In the initial state IS, the cells C1, C2 are in the released state RS. The intrinsic mechanical bias "L" of the cell C1 is in the left direction and the intrinsic mechanical bias "R" of the cell C2 is in the right direction.

The transition T21 is triggered from the initial state IS when the actuator A1 is moved from the inactive position AP1 to the active position AP2 to reach the state ST21. This operation switches the cell C1 to the activated state LF according to the intrinsic mechanical bias "L" of the cell C1. Due to the bias link between the cells C1 and C2, the current mechanical bias of the cell C2 is set to the left direction "L".

The transition T22 is triggered from the initial state IS when the actuator A2 is moved from the position AP1 to the position AP2 to reach the state ST22. This operation switches the cell C2 to the activated state RF according to the intrinsic mechanical bias "R" of the cell C2. Due to the bias link between the cells C1 and C2, the current mechanical bias of the cell C1 switches to the right direction "R".

The transition T23 is triggered from the state ST22 when the actuator A1 is further moved from the position AP1 to the position AP2 to reach the state ST23 where both the cells C1, C2 are in the activated state RF, according to their respective current mechanical biases "R" in the state ST22.

The transition T24 is triggered from the state ST21 when the actuator A2 is further moved from the position AP1 to the position AP2 to reach the state ST24 where both the cells C1, C2 are in the final state LF, according to their respective current mechanical biases "L". It can be observed that all the transitions T21-T24 are reversible, as shown by double-sided arrows.

The transition T25 is triggered from the state ST24 when the actuator A1 is moved from the position AP2 to the position AP1 to reach the state ST22 where the cell C1 is in the released state RS. During the transition T25, the influence of the state of the cell C1 through the bias link induces the cell C2 to switch from the activated state LF to the final activated RF which has the direction of its intrinsic mechanical bias "R". Since the cell C2 is in the final state RF, and due to the bias link between the cells C1, C2, the current mechanical bias of cell C1 is set to "R".

The transition T26 is triggered from state the ST23 when the actuator A2 is moved from the position AP2 to the position AP1 to reach the state ST21 where the cell C2 is in the released state RS. During the transition T26, the influence of the state of the cell C2 through the bias link BH1 vanished, letting the cell C1 to switch from the activated state RF to the activated state LF which has the direction of its intrinsic mechanical bias "L". Since the cell C1 is in the activated state LF, and due to the bias link between the cells C1, C2, the current mechanical bias of the cell C2 is "L". The transitions T25, T26 are not reversible as shown by simple arrows (or grey boxes in Figure 5A), due to the intrinsic mechanical biases of the cells C1, C2.

Figures 3, 4, 5 show that the device implements finite state machines having different behaviors depending on the structure or properties of the cells of the device. It should be observed that the structure behaviors shown in these figures can be obtained with the same structure by setting the actuation amplitude (distance between positions AP1 and AP2) to different values, this distance being increased from the case of Figure 3 to the case of Figure 4, and then to the case of Figure 5.

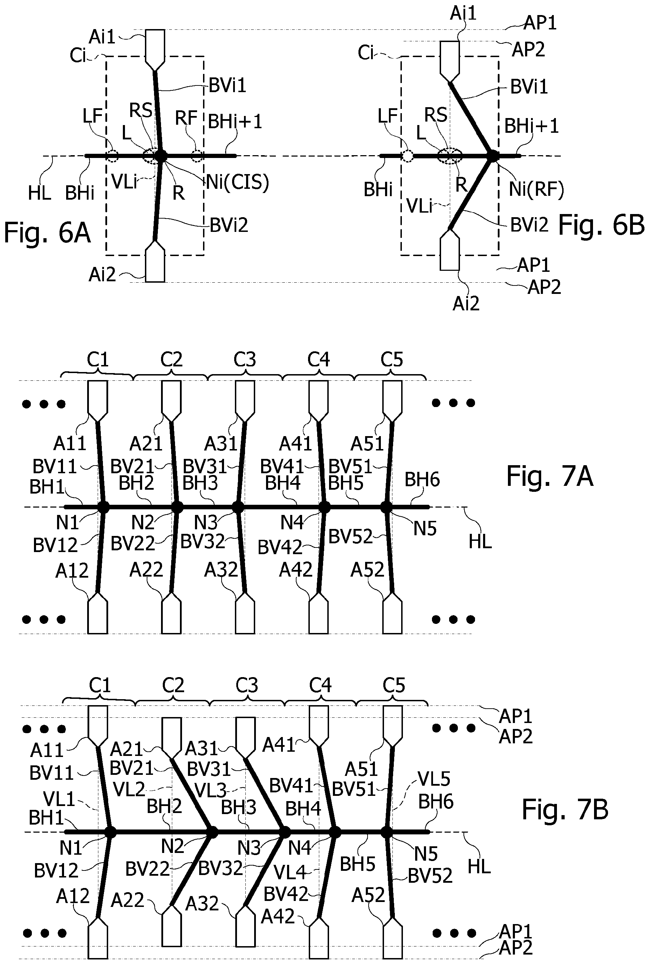

Figures 6A, 6B show a cell Ci of the device, according to an embodiment. The cell Ci comprises a node Ni, mechanical control links BVi1, BVi2 coupling node Ni to two actuators Ai1, Ai2, and mechanical bias links BHi, BHi+1 coupling node Ni respectively to left and right adjacent cells (Ci-1 and Ci+1). The control links BVi1, BVi2 are laterally elastically deformable. The bias links BHi, BHi+1 are elastically axially compressible and extensible and extend along a same axis HL. The actuators Ai1, Ai2 are positioned along an axis VLi perpendicular to axis HL.

The state of the cell Ci is defined by the position of the node Ni along the axis HL. The node Ni has four positions comprising two released positions L, R corresponding to the released state RS of the cell Ci and the current mechanical bias of the cell, one CIS of the positions R, L corresponding to the intrinsic mechanical bias of the cell, and two final positions corresponding respectively to the activated states LF, RF of the cell. The positions R, L are located respectively on the left and right sides of a neutral position corresponding to the intersection of the axes VLi and HL to obtain the mechanical bias. Figure 6A shows the cell Ci in the released state RS with its node Ni in the position R located on the right side of axis VLi, thus defining a current mechanical bias of the cell directed to the right. The actuators Ai1, Ai2 are in the inactive position AP1. In figure 6B, the actuators Ai1, Ai2 are pushed toward each other along the axis VLi to the active position AP2. Due to the mechanical bias of the cell Ci in Figure 6A, the control links BVi1, BVi2 thus forming with the node Ni a toggle joint, push the node Ni towards the right to reach a final right position corresponding to the activated state RF.

Figures 7A, 7B show a device according to an embodiment. The device comprises a plurality of cells having the structure of the cell Ci of Figure 6A. The device comprises a plurality of nodes N1-N5 coupled together to form a chain by mechanical bias links BH1, BH2, BH3, BH4, BH5, BH6 which are elastically axially compressible and extensible. For the sake of clarity, only five nodes are shown in Figures 7A, 7B. Each node N1-N5 is further coupled to a pair of actuators (A11, A12), (A21, A22), (A31, A32), (A41, A42), (A51, A52), by a respective pair of mechanical control links (BV11, BV12), (BV21, BV22), (BV31, BV32), (BV41, BV42), (BV51, BV52). Each pair of control link (BVi1, BVi2) (i = 1, 2, ...) substantially extends perpendicularly to the bias links BHi. In Figure 7A, all actuators are set in the inactive position AP1. Hence, all the cells of the device are in their released states, the nodes Ni being in the position CIS (L or R) according to the respective intrinsic mechanical biases of the cells. The nodes N1, N2 and N4 are in the position R and the nodes N3 and N5 are in the position L. Hence, the cells C1, C2 and C4 have an intrinsic mechanical bias directed to the right and the cells C3 and C5 have an intrinsic mechanical bias directed to the left.

In Figure 7B, the pairs of actuators (A21, A22) and (A31, A32) are set in the active position AP2 and the nodes N2 and N3 are in final position RF. These positions are reached in two steps, first by setting the pair of actuators (A21, A22) to the active position AP2 which sets the node N3 to the position R, and then by setting the pair of actuators (A31, A32) to the position AP2. Setting first the pair of actuators (A31, A32) to the position AP2 would set the nodes N2 and N3 to the final position LF due to the respective intrinsic mechanical biases of cells C2, C3.

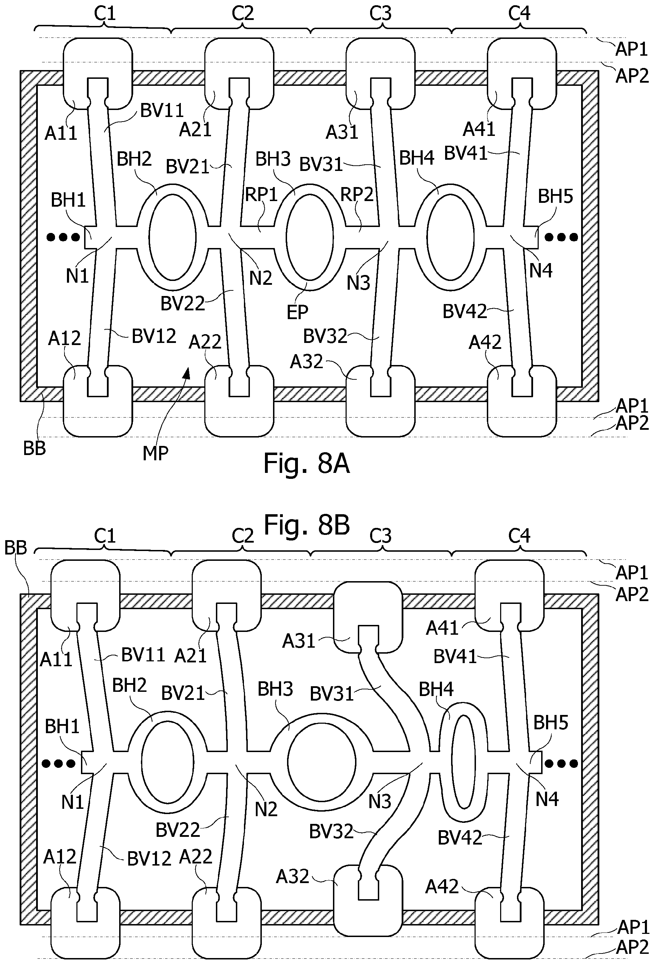

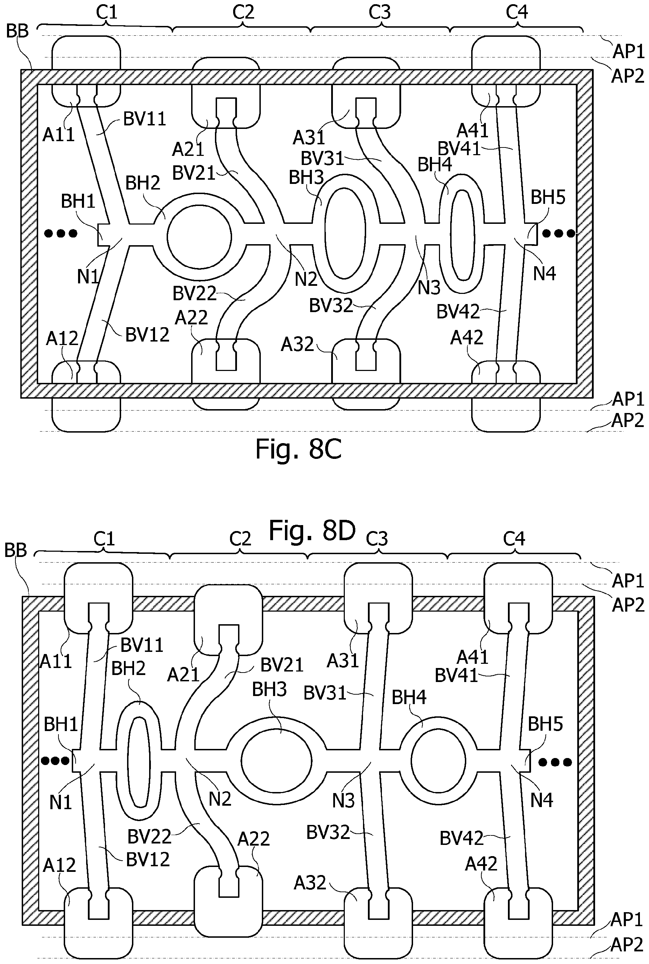

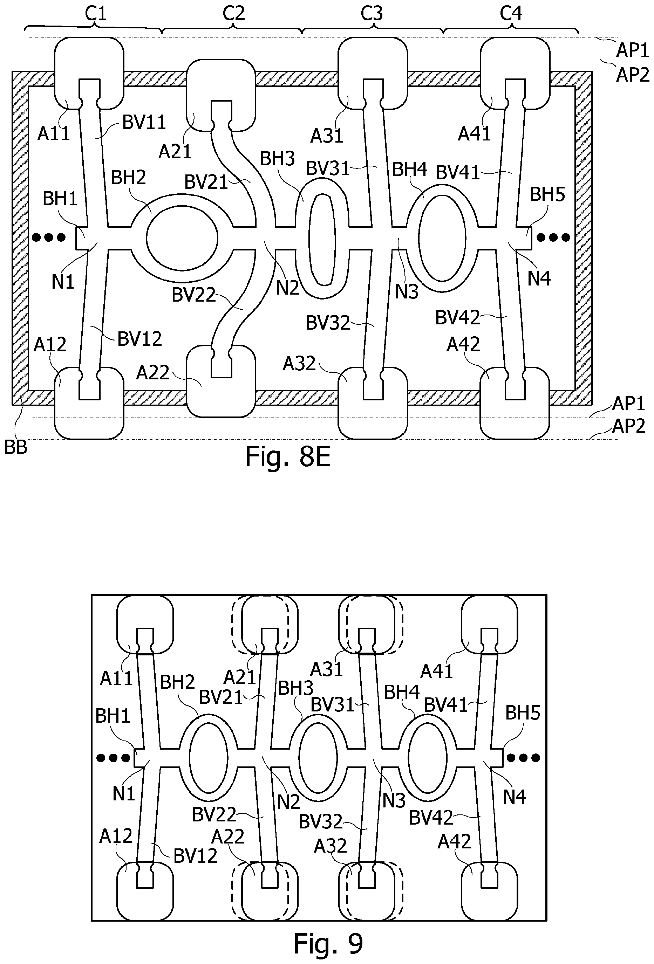

Figures 8A, 8B, 8C, 8D, 8E show an embodiment of a structure that can be used to implement the device of Figure 7A, 7B. In Figures 8A-8E, all the bias links BHi, control links BVi1, BVi2 and nodes Ni (i = 1, 2, ...) of the device are formed in a single piece MP made of an elastically deformable material. The piece MP can be manufactured by molding or by an additive manufacturing process (e.g. using a 3D printer). The material forming the piece MP can have a Young's modulus in the range from 0.1 MPa to 10 MPa. Silicone-based elastomers are in this Young's modulus range. The ratio kv/kh of the stiffness kv of the control links BVi1, BVi2 to the stiffness kh of the links BHi can be set between 0.1 and 1. This ratio can be adjusted by appropriately defining the geometry of the links BHi and BVi.

The free ends of the links BVi1, BVi2 are coupled to the actuators Ai1, Ai2. To be compressible and extensible, each of the links BHi comprises an annular part EP and rectilinear parts RP1, RP2 coupling the annular part respectively to the adjacent nodes Ni-1 and Ni. The annular part EP has at rest an elliptic or circular shape. The links BVi1, BVi2 may be rectilinear. The sections of the rectilinear parts RP1, RP2, the annular parts EP and the links BVi1, BVi2 can have any shape, e.g. square, rectangular, with rounded corners, circular, elliptic, polygonal, ... Other shapes can be used to form compressible and extensible links, such as zig zag shapes.

In Figure 8A, all the actuators Ai1, Ai2 are in the inactive position AP1. Hence, Figure 8A shows that the nodes N1, N3 have an intrinsic mechanical bias directed to the right and the nodes N2 and N4 have an intrinsic mechanical bias directed to the left.

In figure 8B, the actuators A31, A32 are moved from the inactive position AP1 (Figure 8A) to the active position AP2. Since the node N3 has an intrinsic mechanical bias directed to the right, the node N3 moves to the right final position RF. Hence, the control links BV31, BV32 are deformed to the right. The annular part EP of the bias link BH3 is extended in the direction of the bias link. The annular part EP of the bias link BH4 is compressed. The current mechanical biases of the nodes N2 and N4 are moved from the left "L" to the right "R".

In figure 8C, the actuators A21, A22 are further set from the position AP1 to the position AP2. Since the current mechanical bias of the node N2 is directed to the right, the node N2 moves to the right final position RF. The annular part EP of the bias link BH3 substantially returns to its rest position, whereas the annular part EP of the bias link BH2 is extended and the annular part EP of the bias link BH4 is compressed.

Figures 8D, 8E show two different behaviors of the device when the actuators A31, A32 are moved from the position AP2 (Figure 8C) to the position AP1 such that the node N3 returns from the final position RF back to its initial position. In figure 8D, the node N2 switches from the right final position RF to the left final position LF due to its intrinsic mechanical bias directed to the left and the influence of the released cell C3. Since the bias link BH3 is extended, the mechanical bias of node N3 is directed to the left. Hence, the bias link BH4 is slightly extended and the bias link BH2 is compressed. Thus, the current mechanical bias of the node the N1 is set to the left, and the current mechanical bias of the node N4 is changed to be directed to the left according to its intrinsic mechanical bias. The operating mode of Figure 8D correspond to the transition T26 illustrated in Figures 5, 5A.

In Figure 8E, toggling of the node N2 does not occur when the actuators A31, A32 are set from the position AP2 to the position AP1, such that the node N2 remains in the final right position RF and the node N3 returns back to its initial position with its intrinsic mechanical bias directed to the right. Since the node N2 is in the final right position RF, the bias link BH3 is compressed, the bias link BH2 is extended, and the bias link BH4 returns to its rest shape. The current mechanical bias of the node N1 is thus set to the right, and the current mechanical bias of the node N4 is set to the left according to its intrinsic mechanical bias. The operating mode of Figure 8E corresponds to the transition T13 illustrated in Figures 4, 4A, and the transition T23 illustrated in Figures 5, 5A.

The operating modes illustrated in Figures 3-5 or 8D and 8E can be obtained by adjusting the stiffnesses of each of the bias links BHi and each of the pairs of control links (BVi1, BVi2).

The device of Figures 7A, 7B or 8A-8E can be used to form an encoding device having a behavior difficult to predict when the default biases of the cells are not known. To this respect, the shape of the piece MP can be hidden by enclosing it in an opaque casing BB only showing the state of the device, i.e. the states LF and RF of one or more of the cells of the device. In this manner, it is difficult to determine from a given final state of the device a sequence of actuation of the pairs of actuators (Ai1, Ai2) leading to this final state. Even when the respective default biases of the cells are known, it may be difficult to determine the actuation sequence leading to a final state of the device.

Therefore, the device can be used for authentication of a first entity by a second entity, the first entity knowing an actuation sequence, whereas the second entity only knows an expected final state reached by the actuation sequence. The authentication succeeds when the final state obtained by the actuation sequence corresponds with the expected final state. To this purpose, measures can be taken to destroy the structure of the device when attempt is made to open the casing.

Such a device including the structure enclosed in a protected casing can also be used to authenticate objects by attaching the device to the object, so as to destroy the structure when the device is torn from the object by an unauthorized person. Authenticity of the object can be checked by applying a secret actuation sequence to the device and by checking that the final state of the device corresponds to an expected state.

It is observed that the behavior of the device is defined by a number of parameters including the number of cells of its structure, the respective stiffnesses of each of the links BHi, BVi1, BVi2 and the direction "L", "R" of the default bias of each of the cells Ci. This means that adding one cell to the structure implies adding many degrees of freedom to the device. Therefore, it can be very difficult to determine the actuation sequence corresponding to a final state of a given mechanical structure when the structure has a high number of cells.

To more easily hide the internal structure of the device, the distribution of the actuators Ai1, Ai2 can configured to be uniform, as shown in Figures 6-8, such that the default biases of the cells are more easily hidden from the outside of the device. According to another embodiment illustrated by Figure 9, all the links BHi have a same length, which implies that the distribution of the actuators Ai1, Ai2 cannot be uniform. The structure shown in Figure 9 differs from the structure of Figure 8A only by the lengths of the links BHi, and especially the length of the rectilinear parts RP1, RP2 coupling the annular part EP respectively to the adjacent nodes Ni-1 and Ni. Thus the rectilinear parts RP1, RP2 of the links BHi have a same length, the annular parts EP of all the links BHi being the same. Due to the intrinsic biases of the cells C1-C4, the actuators A21, A31 (and A22 and A32) are closer from each other than the actuators A11 and A21 (and A12 and A22). However, an uniform distribution of the actuators Ai1, Ai2 can be kept even with different intrinsic biases and links BHi of the same length, as shown by the actuators A21, A31, A22, A32 drawn in dashed lines.

According to an embodiment, each or a part of the parameters defining the behavior of the device are defined randomly.

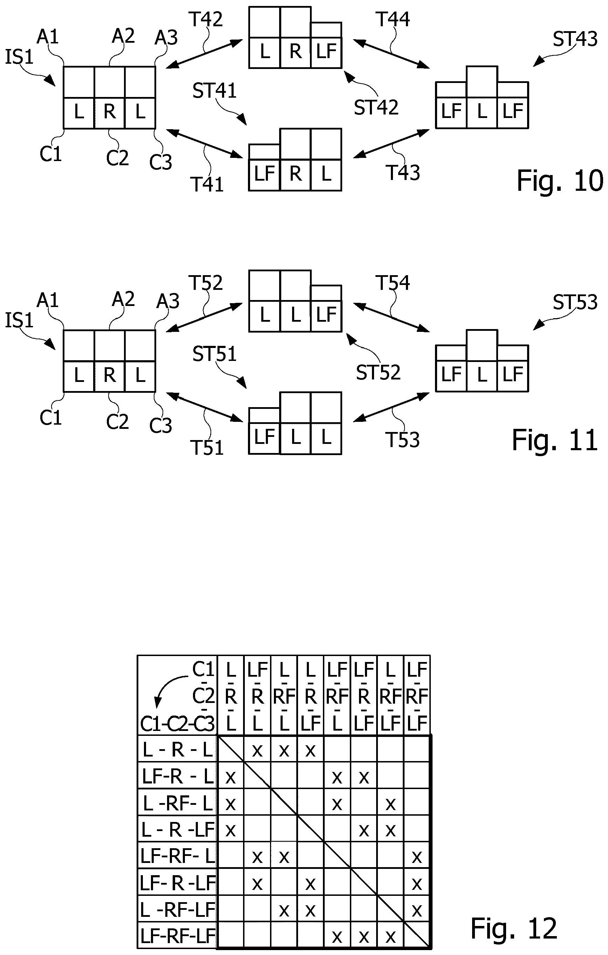

Figures 10 and 11 are state and transition diagrams illustrating another usage of the device. Each of these figures shows different states of three adjacent cells C1, C2, C2 of the device and the state of their respective actuators A1, A2, A3. These figures further show transitions between the different states of the adjacent cells C1, C2, C3. An external state of the device is defined by the position, left or right of a node of cell C2 with respect to a neutral position, only the actuators A1 and A3 being controllable. Hence, the cell C2 remains in its released state, but has a node that can be set either to left position "L" or right position "R". In the initial state IS1 of the device, the cells C1 and C3 have an intrinsic mechanical bias directed to the left, indicated by "L" in Figures 10 and 11, and the cell C2 has an intrinsic mechanical bias directed to the right, indicated by "R" in Figures 10 and 11.

In Figure 10, when the actuator A1 or A3 is moved from the inactive position AP1 to the active position AP2 to reach the state ST41 or ST42 from the initial state IS1, the cell C1 or C3 respectively, switches to its activated state LF corresponding to its intrinsic mechanical bias "L". In the states ST41 and ST42, the cell C2 keeps its intrinsic mechanical bias "R", thanks to the stiffness property of the bias links BHi between the cells C1-C3. When the other of the actuators A1, A3 is moved from the position AP1 to the position AP2 to reach the state ST43, the other of the two cells C1 and C3 switches to the activated state LF according to its current mechanical bias. Due to the stiffness property of the bias links BHi between the cells C1-C3, the node of cell C2 moves to the left when both the adjacent cells C1, C3 are in the left activated state LF. Therefore, a logical function "AND" can be implemented by adjusting the stiffnesses of the bias links to obtain a weak coupling between the cells.

In Figure 11, when the actuator A1 or A3 is moved from the position AP1 to the position AP2 to reach the state ST51 or ST52 from the initial state IS1, the cell C1 or C3, respectively, switches to its activated state LF corresponding to its intrinsic mechanical bias "L". Due to the stiffness property of the bias link BHi between the cells C1 or C3 and C2, the node of cell C2 moves to the left when at least one of its adjacent cells C1, C3 is in the left activated state LF. Thus, the current bias of the cell C2 is set to "L". When the other of the actuators A1, A3 is moved from position AP1 to position AP2 to reach state ST53, the other of the two cells C1 and C3 switches to the activated state LF according to its current mechanical bias. Thus, both the cells C1, C3 are in the left activated state LF and cell C2 keeps its current mechanical bias "L" in the state ST53. Therefore, a logical function "OR" can be implemented by adjusting the stiffnesses of the bias links BHi to obtain a strong coupling between the cells.

It is observed that the same logical functions "AND" and "OR" can be implemented with cells having intrinsic mechanical biases set to R, L, R instead of L, R, L as in Figures 10, 11. It is also observed that the device above-disclosed can perform logical functions without requiring electrical power.

The device can implement other logical functions that can be more complex, by using more cells and/or selectively adjusting the parameters of the mechanical structure, and by selecting input and output parameters of the device that are to be used as one or more inputs and outputs of the logical function.

Figures 12-16 illustrate state and transition diagrams of a device comprising three cells C1, C2, C3. Figures 12-16 use the same representation conventions and formalism as Figures 3A, 4A, 5A. Each of figures 12-16 shows different states of three adjacent cells of the device in the first row and the first column. These figures further show crosses "x" representing transitions between the different states of the three cells. A diagonal line separates the transitions triggered by moving one of the actuators A1, A2, A3 from the inactive position AP1 to the active position AP2 (below the diagonal line), from the transitions triggered by moving one of the actuators A1, A2, A3 from the position AP2 to the position AP1 (above the diagonal line). Transitions in a box colored in grey are irreversible transitions. The default biases of the cells C1, C2, C3 of the device are "L-R-L" (in the second row and second column of the table), meaning that the first and third cells have an intrinsic mechanical bias in the left direction "L" and the second cell has an intrinsic mechanical bias in the right direction "R".

In Figure 12, the bias links between the cells are weak such that they do not change the current mechanical bias of an adjacent cell of the device when one cell switches to a activated state LF or RF having a direction opposite to that of the default bias of the adjacent cell. Therefore, the device has a final state set to "LF-RF-LF" (first column and last row or first row and last column of the table), in which all the cells are in a activated state having the direction of their default biases, the final state of the device being reached when all the actuators of the device are set in the active position AP2.

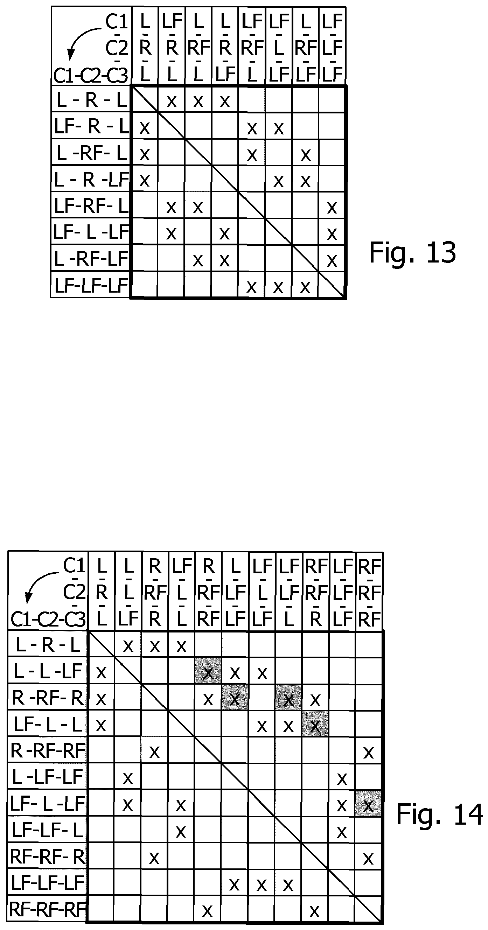

In Figure 13, the bias links BHi between the cells are stronger than in the embodiment of Figure 12, such that when the first and third cells are in the same activated state "LF" having the direction of their default biases, they set the current bias of the second cell from the direction "R" to the direction "L". Since the left direction is in the majority in the default biases of the device, the device has the final state "LF-LF-LF" when all the actuators of the device are in the position AP2.

In Figures 12 and 13, the device has eight reachable states and all the transitions are reversible (the positions of the "x" in the tables are symmetrical about the diagonal line).

In Figure 14, the device has eleven different reachable states and the bias links BHi between the cells are stronger than in the embodiment of Figure 13, such that when a cell is actuated in an activated state, the current bias of each adjacent cell is set in the direction of the final state of the actuated cell. Therefore, the device can reach both the final states "LF-LF-LF" and "RF-RF-RF". The stiffnesses of the bias links between the cells and the stiffnesses of the control links of the cells are further adjusted such that when one actuator Ai is set from the position AP2 to the position AP1, the current biases of the adjacent cells return to their intrinsic mechanical biases and the adjacent cells can switch between the two activated states RF and LF. This produces irreversible transitions from "R-RF-RF" to "L-L-LF", from "L-LF-LF" to "R-RF-R", from "LF-LF-L" to "R-RF-R", from "RF-RF-R" to "LF-L-L", and from "RF-RF-RF" to "LF-L-LF".

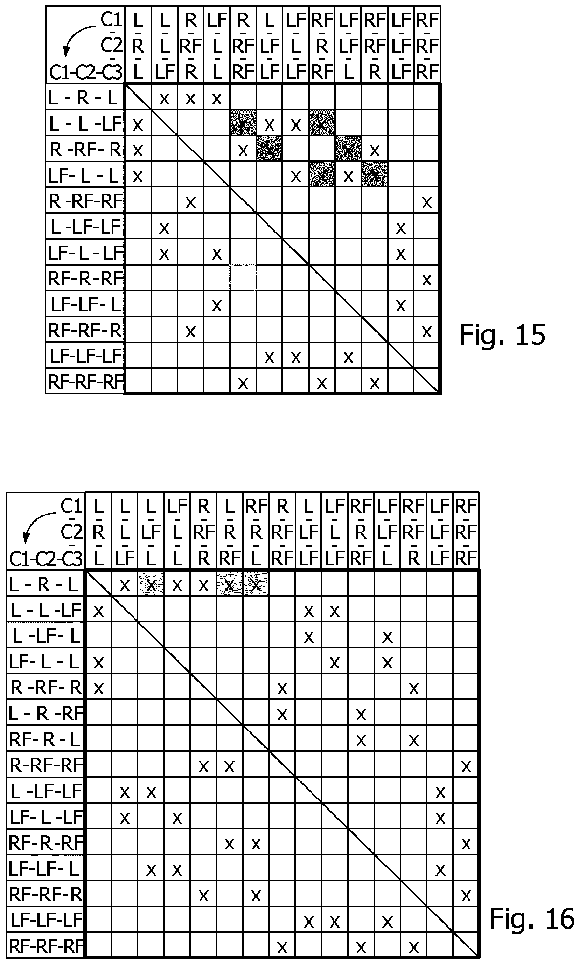

In Figure 15, the device has twelve different reachable states and the bias links between the cells are such that when a cell is in an activated state, the current bias of each adjacent cell is set in the direction of the activated state. Therefore, the device can reach both the final states "LF-LF-LF" and "RF-RF-RF". The stiffnesses of the bias links between the cells and the stiffnesses of the control links of the cells are further adjusted such that when one actuator is set from the position AP2 to the position AP1, the current biases of the adjacent cells return to their intrinsic mechanical biases and the adjacent cells can switch between the two activated states RF and LF. In addition, when the central cell has its two adjacent cells are in the same activated state, the current bias of the central cell has the direction of the activated state of the other cells. This produces irreversible transitions from "R-RF-RF" to "L-L-LF", from "L-LF-LF" to "R-RF-R", from "LF-LF-L" to "R-RF-R", from "RF-RF-R" to "LF-L-L", and from "RF-R-RF" to "L-L-LF" or to "LF-L-L".

In Figure 16, the device has fifteen different reachable states and the bias links between the cells are such that when a cell is in an activated state, the current bias of each adjacent cell is set in the direction of the final state. Therefore, the device can reach both the activated states "LF-LF-LF" and "RF-RF-RF". The bias links between the cells are further adjusted such that the cells do not switch between the activated states RF and LF. This produces irreversible transitions from "L-LF-L", from "L-R-RF" and from "RF-R-L" to the initial state "L-R-L".

When comparing the state and transition diagrams of a two-cell structure (Figures 3A-5A) with the diagrams of a three-cell structure (Figures 12-16), it can be observed that the complexity of the behavior of the device can have more than an exponential growth with the number of cells in the structure. It can be further observed that a same structure can have many different behaviors depending on the stiffnesses of the bias links and the control links defining the intrinsic mechanical biases of the cells.

According to an embodiment, the respective stiffnesses of each bias and control link are individually adjusted to different values to obtain groups of adjacent cells having different behaviors.

In the embodiments of the device disclosed above, the cells are linked together to form a chain or a one-dimensional structure. According to other embodiments of the device, each cell is linked to three or more adjacent cells by bias links to form two-dimensional or three-dimensional structures. Thus, the behavior of one cell of the structure can be influenced by the respective states of more than two cells.

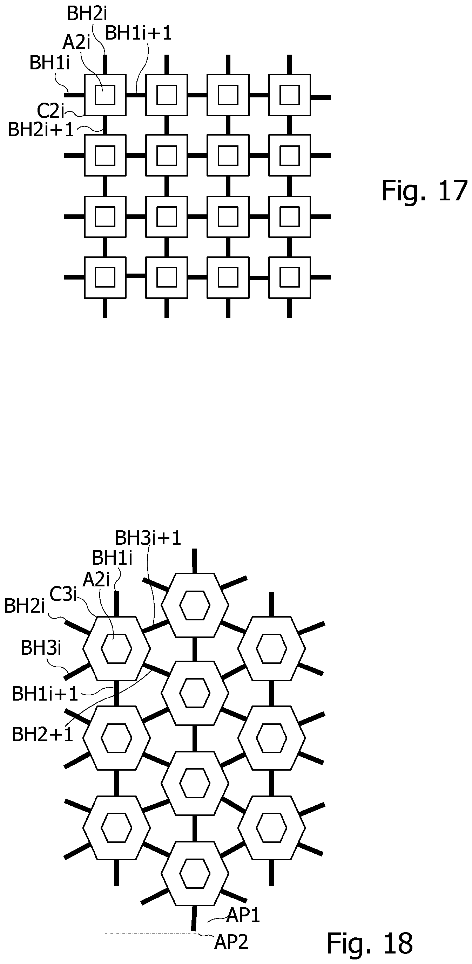

Figures 17 and 18 illustrate examples of two-dimensional mechanical structures according to embodiments. In Figure 17, each cell C2i of the device is controlled by one actuator A2i (or two actuators moved at the same time, similarly to the 1D-configurations disclosed in Figures 7A, 7B) and is coupled to four adjacent cells respectively by four bias links BH1i, BH1i+1, BH2i and BH2i+1. Each cell C2i can be configured to have a released state and an activated state, each state having eight directions in angles e.g., n x 45° (n = 0, 1, ..., 7), the direction of the released state being defined by the current bias of the cell.

In Figure 18, each cell C3i of the device is controlled by one actuator A3i (or two moved at the same time) and is coupled to six adjacent cells respectively by six bias links BH1i, BH1i+1, BH2i, BH2i+1, BH3i and BH3i+1. Each cell C3i can be configured to have a released state and an activated state, each state having twelve directions in angles e.g., n x 30° (n = 0, 1, ..., 11), the direction of the released state being defined by the current bias of the cell.

The illustrations described herein are intended to provide a general understanding of the structure of various embodiments. These illustrations are not intended to serve as a complete description of all of the elements and features of the structures described therein. Many other embodiments may be apparent to those of ordinary skills in the art upon reviewing the disclosure by combining the disclosed embodiments. Other embodiments may be utilized and derived from the disclosure, such that structural substitutions and changes may be made without departing from the scope of the disclosure.

Further, the disclosure and the illustrations are to be considered as illustrative rather than restrictive, and the appended claims are intended to cover all such modifications, enhancements and other embodiments, which fall within the true spirit and scope of the description. Thus, the scope of the following claims is to be determined by the broadest permissible interpretation of the claims and their equivalents, and shall not be restricted or limited by the foregoing description.

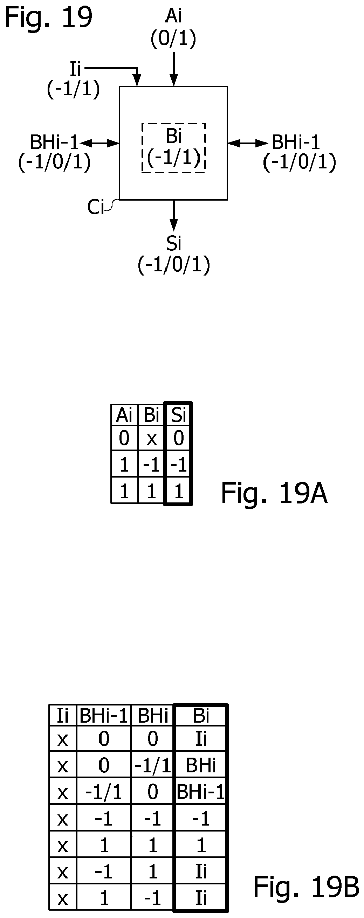

In this respect, the device can be also implemented by an electrical logic circuit comprising a plurality of cells as shown in Figure 19, comprising logic gates and/or flip-flops depending on the behavior of each cell. In Figure 19, each cell has a current bias Bi that can be set either to "1" or "-1", one actuator input Ai that can be set either to "0" or "1", one input Ii defining a default or intrinsic bias of the cell, one, two or more inputs/outputs BHi-1, BHi representing bias links which are set either to "-1", "0" or "1", for transmitting the currents biases of the cell and/or the adjacent cells in the activated state LF, RF, and one output Si set to set either to "-1", "0" or "1", representing the state of the cell and corresponding respectively to the states LF, RS and RF. The behavior of the cell Ci can be defined by a truth table as shown in Figure 19A, specifying the state Si of the cell as a function of the actuator input Ai and the current bias Bi of the cell. According to the truth table of Figure 19A, the state Si is set to 0 when the actuator input Ai is set to 0. When the actuator input Ai is set to 1, the state Si of the cell switches to the state -1 or 1 corresponding to the value of the current bias Bi. Figure 19B shows an example of a truth table specifying the value of the current bias Bi as a function of the default bias Ii, and the bias links BHi-1, BHi. When the bias links BHi-1, BHi are set to 0 (the cells Ci-1, Ci+1 are in the released state RS), the current bias Bi is set to the value of the default bias Ii. When one of the bias links BHi-1, BHi is set to 0 and the other of the bias links BHi-1, BHi is set to either -1 or 1, the current bias Bi is set to the value of the bias link set to -1 or 1. When both the bias links BHi-1, BHi are set to the same value -1 or 1, the current bias Bi is set to this same value. When the bias links BHi-1, BHi are respectively set to -1 and 1 or 1 and -1, the current bias Bi is set to the value of the default bias Ii. More complex behaviors can be specified depending also on current and previous values of the actuator input Ai, the bias links BHi-1, BHi and the state Si, e.g., to implement the finite state machines of Figures 14-16.

In addition, the bias links BHi-1, BHi of each cell Ci can have more discrete values than 0, -1, 1, or continuous values, depending on the states of the other cells of the structure and the states of these cells with respect to the cell Ci. In this respect, the structure of the device can be such that each cell of the structure has a state depending on the states of other cells of the structure than the adjacent cells to the cell. In the case of an electrical logic circuit, the value of the current bias Bi can be computed or defined by a comparator circuit as a function of the value of the default bias Ii, and the comparison with 0 of the difference BHi+1 - BHi or as a function of the sign of this difference.

Further, an external state of each of the cells can be defined as a function of an internal state of the cell which can be set either to the released state RS or the left or right activated states LF, RF. For example, the external state of each cell Ci can be set either to "L" or "R" depending on e.g., the position, left or right, of the node Ni with respect to the axis VLi, without considering the released or activated internal states of the cell Ci.

Further, the structure of each cell of the disclosed devices can have different other shapes and structures, provided that each cell can be controlled to be set in at least three states and that each cell is coupled to at least one adjacent cell to set the current bias of the adjacent cell when the cell is set in one of the activated states RF, LF. For example, the control links BVi1, BVi2 of each cell can be made of flexible pieces that are linked together by the node Ni to form a toggle joint, and the bias links between adjacent cells can be implemented by springs that can be elastically compressed or stretched. Of course, the cells at ends or edges of the structure are coupled to only one adjacent cell in a one-dimensional structure, or two, three or four adjacent cells in a two-dimensional structure. In addition, the cells at the ends or edges of the structure can be linked to a fixed structure, e.g., the casing housing the structure.

The cells of the disclosed devices are not necessarily actuated by two actuators coupled to the free ends of the links BVi1, BVi2. In this respect, according to an embodiment, one of the free ends of the control links BVi1, BVi2 is fixed and only the other free end of the control links BVi1, BVi2 is movable between two positions (e.g. AP1, AP2) to set the cell in one of the activated states. In addition, the actuators Ai1, Ai2 of each cell are not necessarily present and can be part of the control links BVi1, BVi2.

## Claims

1. A device implementing a finite state machine, the device comprising a plurality of cells (Ci), each cell comprising:
three states (RS, LF, RF) comprising a released state (RS), and two activated states (LF, RF) respectively corresponding to opposite biases,
a control input (Ai, Ai1, Ai2) for setting a current state of the cell from the released state to one of the activated states corresponding to a current bias of the cell, or from one of the final states to the released state, the cell being maintained in one of the activated states by the control input, and
a bias link (BHi) coupling the cell to an adjacent cell (Ci+1) of the plurality of cells, and setting the current bias of the cell to the current bias of the adjacent cell when the adjacent cell is in one of the activated states, a part of the plurality of cells comprising two bias links (BHi, BHi+1) coupled respectively to two adjacent cells, the current bias of the cell being a default bias of the cell when each adjacent cell of the cell is in the released state.

2. The device of claim 1, wherein a state of the device is defined by one or more of the states (Si) or current biases of the cells (Ci) of the device.

3. The device of claim 1 or 2, wherein one of the plurality of cells (Ci) is configured to switch from one to the other of the activated states (LF, RF) corresponding to the default bias (L, R) of the cell when the adjacent cell (Ci+1) is set from one of the activated states to the released state (RS).

4. The device of claim 3, wherein a pair of cells (Ci, Ci+2) having a same default bias and a same adjacent cell (Ci+1) is configured to stay in a same activated state (LF, RF) corresponding to a current bias distinct from the default bias of the pair of cells when the adjacent cell is set from the activated state corresponding to the current bias to the released state (RS).

5. The device of one of claims 1 to 4, wherein each cell (Ci) of the plurality of cells comprises a node (Ni) coupled to:
a control link (BVi1, BVi2) having a free end movable between a first position (AP1) in which the cell is set in the released state (RS), and a second position (AP2) in which the cell is maintained in one of the activated states (LF, RF), each state of the cell corresponding to a respective position of the node, and
the bias link (BHi) coupled to a node of an adjacent cell (Ci+1) of the plurality of cells, the control link and the bias link being elastically deformable, a part of the nodes of the cells being coupled to the nodes of two adjacent cells by a respective bias link.

6. The device of claim 5, wherein each cell (Ci) of the plurality of cells comprises two control links (BVi1, BVi2) each having a free end movable between the first position (AP1) in which the cell is set in the released state (RS) and the second position (AP2) in which the cell is in one of the activated states (LF, RF).

7. The device of claim 5 or 6, wherein a ratio of a stiffness of the control links (BVi1, BVi2) to a stiffness of the bias links (BHi) is set between 0.1 and 1.

8. The device of one of claims 1 to 7, wherein all the cells (Ci) are made of a single piece (MP) in an elastically deformable material manufactured by molding or additive manufacturing.

9. The device of one of claims 1 to 8, wherein the cells (Ci) comprise parts (BVi1, BVi2, BHi) of different stiffnesses, the respective stiffnesses of the parts (BVi1, BVi2, BHi) of the cells and respective default biases of the cells being separately adjusted to render a behavior of the device less predictable.

10. The device of claim 9, wherein the respective stiffnesses of the parts (BVi1, BVi2, BHi) of the cells and respective default biases of the cells (Ci) are randomly adjusted.

11. The device of one of claims 1 to 10, wherein the cells (Ci) are linked by the bias links (BHi) to form a chain.

12. The device of one of claims 1 to 10, wherein the cells are linked by the bias links (BH1i, BH2i, BH3i) to form a two-dimensional structure in which at least a part of the cells has four or six adjacent cells.

13. The device of one of claims 1 to 11, configured to implement a logic function or a cryptographic function having a robustness based on a complexity of a behavior of the device.

14. The device of one of claims 1 to 12, comprising a casing (BB) enclosing the cells (Ci) and masking the respective default biases of the cells and leaving exposed the activated state (LF, RF) of at least one of the cells (Ci).

15. The device of claim 14, comprising means for destroying the cells (Ci) when the casing (BB) is opened, such that the default biases of the cells are kept masked.
